(19) Europäisches Patentamt
European Patent Office
Office européen des brevets

(11) **EP 0 705 993 B1**

(12) **EUROPÄISCHE PATENTSCHRIFT**

(45) Veröffentlichungstag und Bekanntmachung des Hinweises auf die Patenterteilung:
**20.12.2000 Patentblatt 2000/51**

(51) Int Cl.$^7$: **F16D 65/097**

(21) Anmeldenummer: **95114948.3**

(22) Anmeldetag: **22.09.1995**

(54) **Scheibenbremse**

Disk brake

Frein à disque

(84) Benannte Vertragsstaaten:
**DE DK ES FR GB IT SE**

(30) Priorität: **06.10.1994 DE 4435669**

(43) Veröffentlichungstag der Anmeldung:
**10.04.1996 Patentblatt 1996/15**

(73) Patentinhaber: **BBA Friction GmbH**
**51375 Leverkusen (DE)**

(72) Erfinder:
• **Hoffrichter, Wolfgang**
**D-50676 Köln (DE)**

• **Rinsdorf, Andreas**
**D-57258 Freundenberg (DE)**

(74) Vertreter: **Dallmeyer, Georg, Dipl.-Ing. et al**
**Patentanwälte**
**Von Kreisler-Selting-Werner**
**Bahnhofsvorplatz 1 (Deichmannhaus)**
**50667 Köln (DE)**

(56) Entgegenhaltungen:
**DE-A- 3 333 670        DE-U- 6 805 501**

• **PATENT ABSTRACTS OF JAPAN vol. 007 no. 005 (M-184) ,11.Januar 1983 & JP-A-57 163736 (NITSUSHIN KOGYO KK) 8.Oktober 1982,**

**Beschreibung**

Die Erfindung betrifft eine Scheibenbremse nach dem Oberbegriff des Anspruchs 1 bzw. eine Bremsbacke für eine Scheibenbremse nach dem Oberbegriff des Anspruchs 8.

Derartige Scheibenbremsen werden als Verzögerungsbremsen vorzugsweise in Kraftfahrzeugen eingesetzt. Es sind unterschiedliche Bauarten, z.B. Festsattel oder Schwimmsattel-Scheibenbremsen bekannt.

Während des Bremsvorgangs wird über eine Kolbenzylindereinheit Druck mit Hilfe des die Bremsscheibe übergreifenden Bremssattels auf zwei Bremsbacken ausgeübt, die beiderseits der Bremsscheibe angeordnet sind und gegen diese angepreßt werden.

Beim Reibvorgang entsteht zwischen dem Bremsbelag der Bremsbacken und der Scheibe eine tangential gerichtete Reibungsschwingung. Diese Reibungsschwingung ist beim momentanen Stand der Technik unvermeidlich. Die Stärke der Anregung und deren Frequenz kann durch eine Variation des Reibmaterials verändert werden. Da jedoch Reibwertniveau bzw. Reibwertkonstanz und gutes Geräuschverhalten meistens nicht gleichzeitig erreichbar sind, ist es im allgemeinen nicht möglich, ein Reibmaterial zu entwikkeln, das ohne den Einsatz von Sekundärdämpfungsmaßnahmen in der Bremse geräuschlos ist. Die Bremsgeräusche wie das allgemein bekannte Bremsenquietschen tritt im Bereich von 1 bis 10 KHz und bei geringen Verzögerungen und niedrigen Geschwindigkeiten auf.

Bekannte Sekundärdämpfungsmaßnahmen sind in Form von Gummilack oder in Axialrichtung wirkenden Dämpfungsblechen auf der Rückseite von Bremsbacken bekannt. Oft genügen diese Geräuschdämpfungsmaßnahmen.

Es ist bekannt (DE 33 33 670 A1) zwischen der Bremsbacke und einem als Anschlag dienenden Führungselement des Bremsträgers Dämpfungselemente anzuordnen. Da diese Dämpfungselemente hohen in Tangentialrichtung der Bremsscheibe wirkenden Kräften ausgesetzt sind, unterliegen sie einem hohen Verschleiß. Des weiteren ergibt sich ein erhöhter Montage- und Kostenaufwand.

Aufgrund der hohen Flächenpressung zwischen Trägerplatte und Führungselement in Kombination mit hohen Betriebstemperaturen der Bremse ist insbesondere die Verwendung von Gummi und Kunststoffen nachteilig.

Ein gattungsgemäßer Stand der Technik ist aus der JP-A-57 163736 und der DE-U-68 05 501 bekannt geworden. Beide zeigen eine Scheibenbremse für Kraftfahrzeuge mit einem Bremsträger, einer Bremsscheibe, einen die Bremsscheibe übergreifenden, an dem Bremsträger befestigten Bremssattel für beiderseits der Bremsscheibe angeordnete Bremsbacken. Die Bremsbacken bestehen aus einer Trägerplatte und einem mit der Trägerplatte fest verbundenen Bremsbelag. Zwischen Trägerplatte und den Führungselementen des Bremsträgers sind zum Verhindern von Reibungsschwingungen beim Bremsen Dämpfungsmittel vorgesehen. Bei der JP-A-57 163736 bestehen die Dämpfungsmittel aus Aussparungen in einem Vorsprung der Trägerplatte, die die elastische Deformation der Vorsprünge erleichtern soll. Die Kraftübertragung beim Übersteigen bestimmter Bremskräfte erfolgt nicht durch Schließen der Aussparung, sondern durch Schließen eines Spaltes C zwischen dem Bremsträger und dem Bremsbelag. Die Aussparung hat daher nur den Zweck, den Vorsprung materialmäßig zu schwächen, um eine Deformation zu begünstigen. Eine Übertragung der vollen tangentialen Bremskraft erfolgt aber nicht durch den Vorsprung, sondern durch die Seitenkante der Trägerplatte.

DE-U-68 05 501 beschreibt ebenfalls ein zwischen Trägerplatte und Führungselement wirkendes Dämpfungselement in Form eines beweglichen Führungselementes, das durch Federn vorgespannt gegen den Bremsträger abgestützt ist. Die Vorspannung durch die Federn ist einstellbar, wobei die Führungsfläche bei hohen Tangentialkräften gegen den Bremsträger anliegt.

Diese Konstruktion eines Dämpfungselementes ist besonders aufwendig und benötigt zusätzlich bewegliche, dem Verschleiß unterliegende Teile. Sie ist dadurch störungsanfällig und kann desweiteren aufgrund von Eigenschwingungen des Feder-Masse-Systems selbst Störgeräusche verursachen.

Der Erfindung liegt die Aufgabe zugrunde, eine Scheibenbremse der eingangs genannten Art zu schaffen, die eine kostengünstige, verschleißfeste und wirkungsvolle Geräuschdämpfung ermöglicht.

Zur Lösung dieser Aufgabe dienen die Merkmale des Anspruchs 1 bzw. 8.

Die Erfindung sieht in vorteilhafter Weise vor, daß die Dämpfungsmittel durch Schlitze gebildet sind, die sich bei hohen Tangentialkräften schließen und dann die tangentialen Bremskräfte unverändert auf den Bremsträger übertragen. Die in der Trägerplatte bzw. in den Führungselementen des Bremsträgers integrierten Dämpfungsmittel können die beim Bremsvorgang entstehenden Tangentialkräfte von ca. 500 - 2000 N abfedern und bei höheren Tangentialkräften diese unverändert an die Führungselemente übertragen. Dies bedeutet, daß sich die Bremsbacke bei höheren Bremsdrükken, bei denen kein Bremsenquietschen auftritt, unbeeinflußt von dem Dämpfungsmittel an dem Führungselement abstützen kann.

Die Gestaltung der Dämpfungsmittel in Form von Schlitzen hat den Vorteil, daß die Trägerplatte bzw. das Führungselement des Bremsträgers selbst in der Art einer Blattfeder wirkt, wobei die Feder in dem Bereich, in dem Bremsenquietschen auftreten kann, im elastischen Bereich bleibt und sich bei höheren Kräften durch Schließen des Spaltes direkt abstützen kann und somit eine einwandfreie Übertragung von hohen Bremskräften gewährleistet.

Bei einer Integration der Dämpfungsmittel in die Trägerplatte werden keine weiteren Teile benötigt, die einen zusätzlichen Herstellungs- und Montageaufwand zur Folge haben. Da die Hauptübertragungsrichtung der Schwingungen tangential ist, ist es zur Unterdrückung des Bremsenquietschens erheblich effektiver, Schwingungsdämpfungs- und Schwingungsentkopplungseinrichtungen in tangentialer Richtung an der Bremsbacke vorzusehen.

Vorzugsweise bestehen die Dämpfungsmittel aus Federelementen. Ein derartiges Federelement kann entsprechend seiner Federcharakteristik bis zu einem bestimmten Druckwert tangentiale Kräfte aufnehmen und die Schwingungen weitestgehend kompensieren.

Ein solches durch Schlitze gebildetes Dämpfungsmittel benötigt überhaupt keine zusätzlichen Bauteile, vielmehr kann die Trägerplatte bei der Herstellung gleich mit den entsprechenden Schlitzen versehen werden. Durch die Wahl der Dimensionen des mindestens einen Schlitzes lassen sich die Federcharakteristiken an die gestellten Anforderungen anpassen. Das Federungsverhalten läßt sich auch ggf. durch Auswahl des Werkstoffes für die Trägerplatte zusätzlich beeinflussen. Ein wesentlicher Vorteil der Schlitze besteht auch darin, daß sie von der Betriebstemperatur der Bremse nicht beeinflußt werden.

Die Schlitze können im wesentlichen parallel zu den Seitenkanten der Trägerplatte verlaufen. Dabei sind die Schlitze normalerweise orthogonal zu den tangentialen Schwingungen ausgerichtet. Vorzugsweise verlaufen die Schlitze im belagfreien Bereich der Trägerplatte.

Zur Beeinflussung der Federcharakteristik der Dämpfungsmittel ist es auch möglich, in den Schlitzen zusätzliche Federelemente, z. B. Reibmaterial, einzusetzen.

Vorzugsweise ist vorgesehen, daß die Schlitze in seitlich vorstehenden Vorsprüngen der Trägerplatte angeordnet sind. Diese Bereiche sind nicht von dem Bremsbelag überdeckt.

Wenn die Dämpfungsmittel nicht im Randbereich der Trägerplatte, sondern in den seitlichen Führungselementen integriert sind, ist es auch hier vorgesehen, einen Abstand von wenigen mm von der Anschlagfläche des Führungselementes einzuhalten.

Im folgenden werden unter Bezugnahme auf die Zeichnungen Ausführungsbeispiele der Erfindung näher erläutert.

Es zeigen:

Fig. 1      einen Ausschnitt einer Scheibenbremsanlage im Querschnitt,

Fig. 2      eine Seitenansicht gemäß Fig. 1,

Fig. 3      einen in den Bremsträger eingesetzten Bremsbelag als erstes Ausführungsbeispiel,

Fig. 4      ein zweites Ausführungsbeispiel,

Fig. 5      ein drittes Ausführungsbeispiel eines Bremsbelages, und

Fig. 6      die Verformung des Dämpfungselementes unter Belastung.

Fig. 7      eine alternative Ausführungsform der Erfindung,

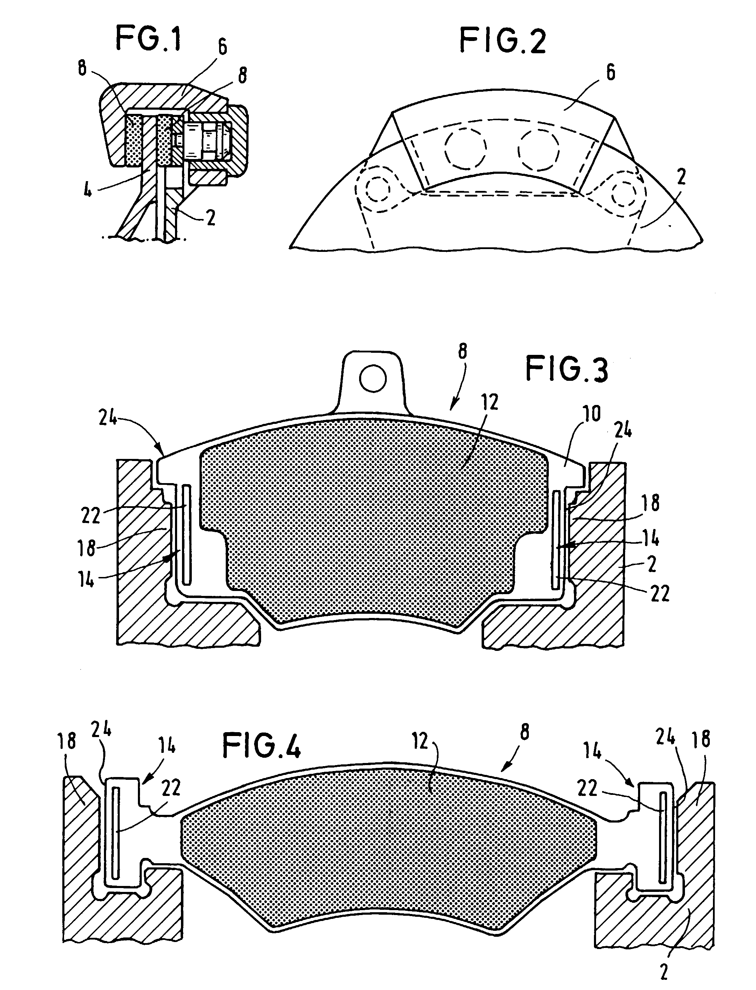

Die in Fig. 1 gezeigte Scheibenbremse 1 besteht im einzelnen aus einem Bremsträger 2, der einen Bremszylinder 3 mit einem schwimmenden Bremssattel 6 aufnimmt. Der Bremssattel 6 preßt in Verbindung mit dem Bremszylinder 3 zwei Bremsbacken 8 von beiden Seiten gegen eine Bremsscheibe 4, die mit der Drehbewegung eines Fahrzeugrades gekoppelt ist.

Jede Bremsbacke 8 besteht aus einer Trägerplatte 10, auf der ein Bremsbelag 12 befestigt ist.

Der Bremsträger 2 ist mit Führungselementen 18 zur Aufnahme der Bremsbacken 8 versehen. Die Führungselemente 18 sind im wesentlichen der Außenkontur der Trägerplatte 10 der Bremsbacke 8 angepaßt. Beim Bremsvorgang entsteht zwischen Bremsbacke 8 und Bremsscheibe 4 eine durch Trangentialkräfte induzierte tangential gerichtete Reibungsschwingung, die das bekannte Bremsgeräusch erzeugt. Die Bremsbacken 8 der Fign. 3,4 und 5 weisen als Dämpfung- und Entkopplungsmaßnahme Dämpfungsmittel 14 in den den Führungselementen 18 zugewandten Seitenkanten 24 der Trägerplatte 10 auf. Diese Dämpfungsmittel 14 bestehen aus Federelementen, die in den Ausführungsbeispielen durch Schlitze 22 in der Trägerplatte 10 gebildet sind. Aufgrund der Schlitze 22 wird an den Seitenkanten 24 der Trägerplatte 10 eine Feder gebildet, die in der Art einer Blattfeder arbeitet und die die Energie der Reibungsschwingung schon an der Kontaktstelle zwischen Trägerplatte 10 und Bremsträger 2 absorbiert und somit die Geräuschentwicklung verhindert. Die Feder ist dabei vorzugsweise so auszulegen, daß sie bei tangentialen Bremskräften bis zu 500-2000 N im elastischen Bereich bleibt. Auf diese Weise ist die Federwirkung in einem verhältnismäßig niedrigen Bremsdruckbereich, in dem am häufigsten Bremsenquietschen entsteht, wirksam. Bei tangentialen Bremskräften über 500-2000 N kann sich der Spalt 22 schließen, so daß hohe Bremskräfte in Tangentialrichtung einwandfrei übertragen werden können.

Aufgrund der vorgegebenen Maximaltangentialkraft von ca. 500-2000 N, bei der die Federwirkung des Dämpfungsmittels 14 aufgehoben werden soll, lassen sich die Federparameterberechnen.

Die maximale tangentiale Kraft läßt sich nach folgender Beziehung berechnen:

$$F_{max} = F_N \cdot \mu$$

$$= P \cdot A \cdot \mu .$$

Die Durchbiegung des Federelementes errechnet sich aus der Formel für zweiseitig eingespannte Träger entsprechend folgender Beziehung:

$$w = 12 \cdot \frac{Fl^3}{kEbh^3} ,$$

wobei k = 150 als konstanter Faktor aus einer Berechnung nach der Finite-Element-Methode für die Kontaktstelle zwischen Belag und Träger ermittelt wurde.

Bei einer Trägerplattendicke von ca. 5 mm ergibt sich beispielsweise bei einer Länge des Schlitzes 22 von ca. 20 mm und einer Federdicke, das ist der Abstand des Schlitzes 22 von der Seitenkante 24, von ca. 1,2 mm, eine Spaltweite von ca. 0,6 mm.

Die Länge des Spalte wird bei vorgegebener Spaltweite nach folgender Gleichung ermittelt:

$$1 = \sqrt[3]{\frac{wkEbh^3}{12F}} ,$$

wobei nachfolgend die in den Formeln angegebenen Parameter und Einheiten angegeben sind:

| | |
|---|---|
| $F_{max}$ | auftretende Reibkraft bei P (N) |
| $F^N$ | Normalkraft (N) |
| $\mu$ | Reibwert (-) |
| P | Leitungsdruck (bar) |
| A | Kolbenfläche (mm$^2$) |
| w | Durchbiegung (mm) |
| l | Federlänge (mm) |
| b | Breite (Rückenplattendicke) (mm) |
| h | Höhe (Federdicke) (mm) |
| E | Elastizitätsmodul (N/mm$^2$) |

Es kann auch vorgesehen sein, in den Schlitzen 22 zusätzliche Federelemente, z. B. Reibmaterial, vorzusehen, um das Federungsverhalten zu optimieren. In diesem Fall kann die Spaltweite und die Federdicke vergrößert sein und das Reibmaterial den Schlitz überdecken.

In Fig. 3 ist erkennbar, daß die Schlitze 22 an beiden Seitenkanten 24 und parallel zu diesen auf der Trägerplatte 10 angeordnet sind. Die Seitenkanten 24 der Trägerplatte 10 sind wiederum parallel zu den seitlichen Führungselementen 18 des Bremsträgers 2.

Fig. 4 zeigt ein weiteres Ausführungsbeispiel eines Bremsbelages mit einer sog. Hammerkopfhalterung, bei der ebenfalls das Führungselement 18, die Seitenkante 24 und der Schlitz 22 parallel zueinander verlaufen.

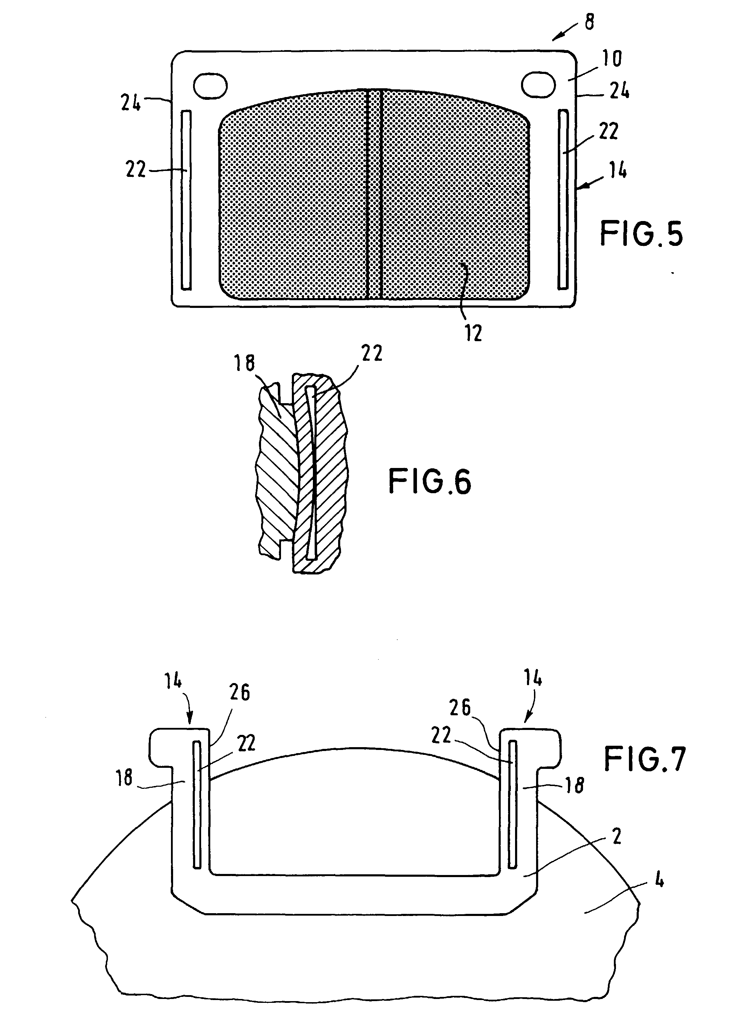

Fig. 5 zeigt ein weiteres Ausführungsbeispiel einer Bremsbacke, deren Trägerplatte 10 mit ein Dämpfungsmittel 14 bildenden Schlitzen 22 versehen ist. Fig. 6 zeigt das Dämpfungselement 14 unter Belastung mit einer Tangentialkraft über 500-2000 N. In diesem Fall wird der Schlitz 22 zusammengedrückt und die Tangentialkraft unbeeinflußt übertragen.

Bei den Ausführungsbeispielen der Fign. 3 bis 6 ist vorgesehen, daß das Führungselement 18 nur im elastischen Bereich des Federelementes auf die Trägerplatte einwirkt. Alternativ kann die der Trägerplatte zugewandte Stirnfläche des Führungselementes 18 ballig gestaltet sein und somit die Verformung des Federelementes unterstützen. Ein Kontakt zwischen Führungselement 18 und Seitenkante 24 der Trägerplatte erfolgt nur im Bereich des Federelementes.

Fig. 7 zeigt ein Ausführungsbeispiel, bei dem die Dämpfungsmittel 14 in den Führungselementen 18 des Bremsträgers 2 integriert sind. Die Dämpfungsmittel 14 bestehen hier ebenfalls aus sich parallel zu den Seitenkanten 26 der Führungselemente 18 erstreckenden Schlitzen 22, die in Verbindung mit dem bis zur Seitenkante 26 verbleibenden Material ein Federelement bilden. Derartige Führungselemente 18 für die Bremsbacken 8 lassen sich auch mit den Bremsbacken der Fign. 3,4 und 5 kombinieren.

Die Trägerplatte wirkt mit ihrer Seitenkante 24 nur auf den elastischen Bereich des Federelementes ein.

**Patentansprüche**

1. Scheibenbremse (1) für Kraftfahrzeuge, mit einem Bremsträger (2), einer Bremsscheibe (4), einem die Bremsscheibe (4) übergreifenden, an dem Bremsträger (2) befestigten Bremssattel (6) für beiderseits der Bremsscheibe (4) angeordnete Bremsbacken (8), jeweils bestehend aus einer Trägerplatte (10) mit tangential zur Drehrichtung der Bremsscheibe (4) sich an seitlichen Führungselementen (18) des Bremsträgers (2) abstützenden Seitenkanten (24), einem mit der Trägerplatte (10) fest verbundenen Bremsbelag (12) und mit zwischen Trägerplatte (10) und Führungselementen (18) wirkenden durch Schlitze (22) gebildeten Dämpfungsmitteln (14) zum Verhindern von Reibungsschwingungen beim Bremsen, die in den den Führungselementen (18) zugewandten Seitenkanten (24) der Trägerplatte (10) und/oder in dem seitlichen Führungselementen (18) des Bremsträgers (2) integriert sind,
**dadurch gekennzeichnet,**
daß die Dämpfungsmittel (14) bei Tangentialkräften bis zu ca. 500 - 2000 N im elastisch deformierbaren Bereich verbleiben und die Tangentialkräfte abfedern und bei höheren Tangentialkräften durch Schließen der Schlitze (22) die Tangentialkräfte auf den Bremsträger (2) unverändert übertragen.

**2.** Scheibenbremse nach Anspruch 1, dadurch gekennzeichnet, daß die Dämpfungsmittel (14) aus Federelementen bestehen.

**3.** Scheibenbremse nach Anspruch 1 oder 2, dadurch gekennzeichnet, daß die Schlitze (22) im wesentlichen parallel zu den Seitenkanten (24) der Trägerplatte (10) verlaufen.

**4.** Scheibenbremse nach einem der Ansprüche 1 bis 3, dadurch gekennzeichnet, daß die Schlitze (22) in seitlich vorstehenden Vorsprüngen (16) der Trägerplatte (10) angeordnet sind.

**5.** Scheibenbremse nach einem der Ansprüche 1 bis 4, dadurch gekennzeichnet, daß in den Schlitzen (22) zusätzliche Federelemente, z. B. Reibmaterial, eingesetzt sind.

**6.** Scheibenbremse nach einem der Ansprüche 1 bis 5, dadurch gekennzeichnet, daß die Führungselemente (18) bzw. die Seitenkante (24) der Trägerplatte (10) nur im elastischen Bereich des Schlitzes (22) auf das jeweilige Gegenstück einwirken.

**7.** Scheibenbremse nach Anspruch 6, dadurch gekennzeichnet, daß die Führungselemente (18) bzw. die Seitenkante (24) der Trägerplatte (10) im Bereich des Schlitzes (22) mit einer balligen Außenkontur auf das jeweilige Gegenstück einwirken.

**8.** Bremsbacke für eine Scheibenbremse (1) für Kraftfahrzeuge, mit einem Bremsträger (2), einer Bremsscheibe (4), einem die Bremsscheibe (4) übergreifenden, an dem Bremsträger (2) befestigten Bremssattel (6) für beiderseits der Bremsscheibe (4) angeordnete Bremsbacken (8), jeweils bestehend aus einer Trägerplatte (10) mit Seitenkanten (24), die gebilet sind, um sich tangential zur Drehrichtung der Bremsscheibe (4) an seitlichen Führungselementen (18) abzustützen, einem mit der Trägerplatte (10) fest verbundenen Bremsbelag (12) und mit durch Schlitze (22) gebildeten Dämpfungsmitteln (14) zum Verhindern von Reibungsschwingungen beim Bremsen, die in den den Führungselementen (18) zugewandten Seitenkanten (24) der Trägerplatte (10) integriert sind, **dadurch gekennzeichnet,** daß die Dämpfungsmittel (14) bei Tangentialkräften bis zu ca. 500 - 2000 N im elastisch deformierbaren Bereich verbleiben und die Tangentialkräfte abfedern und bei höheren Tangentialkräften durch Schließen der Schlitze (22) die Tangentialkräfte auf den Bremsträger (2) unverändert übertragen.

**Claims**

**1.** A disk brake (1) for motor vehicles comprising a brake support (2), a brake disk (4), a caliper (6) mounted to the brake support (2) and embracing the brake disk (4), the caliper being provided for brake jaws (8) on either side of the brake disk (4), each brake jaw comprising a support plate (10) with lateral edges (24) supported at lateral guiding elements (18) of the brake support (2) in a direction tangential to the rotary direction of the brake disk (4), a brake lining (12) permanently bonded with the support plate (10), and comprising damping means (14) for preventing frictional vibrations upon braking, the damping means acting between the support plate (10) and the guiding elements (18) and being formed by slots (22), said damping means further being integrated in the lateral edges (24) of the support plate (10) facing the guiding elements (18) and/or in the lateral guiding elements (18) of the brake support (2),
characterized in
that the damping means (14) remain within the elastically deformable range at tangential forces up to about 500 - 2000 N, damping the tangential forces, and, when greater tangential forces act, transfer the tangential forces to the brake support (2) as they are by closing the slots (22).

**2.** The disk brake of claim 1, characterized in that the damping means (14) are spring elements.

**3.** The disk brake of claim 1 or 2, characterized in that the slots (22) are substantially parallel to the lateral edges (24) of the support plate (10).

**4.** The disk brake of one of claims 1 to 3, characterized in that the slots (22) are provided in lateral projections of the support plate (10).

**5.** The disk brake of one of claims 1 to 4, characterized in that additional spring elements, e.g. friction material, is inserted in the slots (22).

**6.** The disk brake of one of claims 1 to 5, characterized in that the guiding elements (18) or the lateral edge (24) of the support plate (10) act on the respective counterpart only in the elastic portion of the slot (22).

**7.** The disk brake of claim 6, characterized in that the guiding elements (18) or the lateral edge (24) of the support plate (10) act on their respective counterpart with a bulbous outer shape in the region of the slot (22).

**8.** A brake jaw for a disk brake (1) for motor vehicles comprising a brake support (2), a brake disk (4), a caliper (6) mounted to the brake support (2) and embracing the brake disk (4), the caliper being provided for brake jaws (8) on either side of the brake disk (4), each brake jaw comprising a support plate (10) with lateral edges (24) designed to be supported at lateral guiding elements (18) in a direction tangential to the rotary direction of the brake disk (4), a brake lining (12) permanently bonded with the support plate (10), and comprising damping means (14) for preventing frictional vibrations upon braking, the damping means acting between the support plate (10) and the guiding elements (18) and being formed by slots (22), said damping means further being integrated in the lateral edges (24) of the support plate (10) facing the guiding elements (18), characterized in

that the damping means (14) remain within the elastically deformable range at tangential forces up to about 500 - 2000 N, damping the tangential forces, and, when greater tangential forces act, transfer the tangential forces to the brake support (2) as they are by closing the slots (22).

**Revendications**

1.  Frein à disque (1) pour véhicules automobiles, comportant un support de frein (2), un disque de frein (4), un étrier de frein (6) fixé au support de frein (2), chevauchant le disque de frein (4), pour des segments de frein (8) disposés de part et d'autre du disque de frein (4), chaque segment de frein se composant respectivement d'une plaque support (10) avec des bords latéraux (24) s'appuyant sur des éléments de guidage latéraux (18) du support de frein (2) suivant une direction tangentielle par rapport au sens de rotation du disque de frein (4), d'une garniture de frein (12) fixée à la plaque support (10) et de moyens amortisseurs (14) formés par des fentes (22) et agissant entre la plaque support (10) et les éléments de guidage (18) pour empêcher les vibrations dues au frottement lors du freinage, lesdits moyens amortisseurs étant intégrés dans les bords latéraux (24) de la plaque support (10) tournés vers les éléments de guidage (18) et/ou dans les éléments de guidage latéraux (18) du support de frein (2),
    caractérisé en ce que les moyens amortisseurs (14), pour des forces tangentielles jusqu'à environ 500-2000 N, restent dans le domaine de déformation élastique et amortissent les forces tangentielles et, pour des forces tangentielles supérieures, par fermeture des fentes (22) transmettent inchangées les forces tangentielles au support de frein (2).

2.  Frein à disque selon la revendication 1, caractérisé en ce que les moyens amortisseurs (14) se composent d'éléments élastiques.

3.  Frein à disque selon la revendication 1 ou 2, caractérisé en ce que les fentes (22) s'étendent essentiellement parallèlement aux bords latéraux (24) de la plaque support (10).

4.  Frein à disque selon l'une des revendications 1 à 3, caractérisé en ce que les fentes (22) sont disposées dans des saillies latérales (16) de la plaque support (10).

5.  Frein à disque selon l'une des revendications 1 à 4, caractérisé en ce que des éléments élastiques additionnels, par exemple de la matière de friction, sont insérés dans les fentes (22).

6.  Frein à disque selon l'une des revendications 1 à 5, caractérisé en ce que les éléments de guidage (18) ou les bords latéraux (24) de la plaque support (10) n'agissent que dans le domaine d'élasticité de la fente (22) sur la pièce opposée.

7.  Frein à disque selon la revendication 6, caractérisé en ce que les éléments de guidage (18) ou les bords latéraux (24) de la plaque support (10) agissent dans la région de la fente (22) avec un contour extérieur convexe sur la pièce opposée respective.

8.  Segment de frein pour un frein à disque (1) pour véhicules automobiles, comportant un support de frein (2), un disque de frein (4), un étrier de frein (6) fixé au support de frein (2), chevauchant le disque de frein (4), pour des segments de frein (8) disposés de part et d'autre du disque de frein (4), chaque segment de frein se composant respectivement d'une plaque support (10) avec des bords latéraux (24) qui sont formés pour s'appuyer sur des éléments de guidage latéraux (18) suivant une direction tangentielle par rapport au sens de rotation du disque de frein (4), d'une garniture de frein (12) fixée au support de plaque (10) et de moyens amortisseurs (14) formés par des fentes (22) pour empêcher les vibrations dues au frottement lors du freinage, lesdits moyens amortisseurs étant intégrés dans les bords latéraux (24) de la plaque de support (10) tournés vers les éléments de guidage (18), caractérisé en ce que les moyens amortisseurs (14), pour des forces tangentielles jusqu'à environ 500-2000 N, restent dans le domaine de déformation élastique et amortissent les forces tangentielles et, pour des forces tangentielles supérieures, par fermeture des fentes (22) transmettent inchangées les forces tangentielles au support de frein (2).

FG.1

FIG.2

FIG.3

FIG.4

FIG.5

FIG.6

FIG.7